# EUROPÄISCHE PATENTSCHRIFT

(11) **EP 0 709 655 B1**
(45) Veröffentlichungstag und Bekanntmachung des Hinweises auf die Patenterteilung: **05.12.2001**
(21) Anmeldenummer: 95114778.4
(22) Anmeldetag: 20.09.1995
(51) Int. Cl.: G01D 5/26, G01B 3/00, G01B 5/00, G01D 5/347

(54) **Führung**
Guidance device
Guidage

(30) Priorität: 25.10.1994 DE 4438079
(43) Veröffentlichungstag der Anmeldung: 01.05.1996
(73) Patentinhaber: Dr. Johannes Heidenhain GmbH, 83292 Traunreut (DE)
(72) Erfinder: Tondorf, Sebastian, Dr., D-83329 Waging (DE); Callimici, Christian, D-83714 Miesbach (DE)

(56) Entgegenhaltungen:
- EP-A- 0 168 381
- EP-A- 0 459 294
- US-A- 3 910 703
- US-A- 4 250 381
- US-A- 4 492 032
- PATENT ABSTRACTS OF JAPAN vol. 007, no. 078 (P-188), 31.März 1983 & JP 58 009007 A (NIHON KOUGAKU KOGYO KK), 19.Januar 1983,

## Beschreibung

Die Erfindung betrifft eine Linear- oder Bogenführung insbesondere für Bearbeitungs- oder Meßmaschinen, deren gerade oder gekrümmte Führungsschiene als eigenständige Baueinheit am Maschinenbett befestigbar ist.

Derartige Linear- oder Bogenführungen sind vorzugsweise Wälzführungen, die so ausgebildet sind, daß auf einer gehärteten und geschliffenen geraden oder gekrümmten Führungsbahn als Gegenführung entweder Rollen- oder Kugelelemente in einem Wagen installiert sind (Zeitschriften "Industrie Anzeiger" 18/92, Seiten 43 bis 45 und "Produktion" Nr. 39 vom 29.09.1994, Seite 23).

Eine Linearführung mit integriertem Längenmeßsystem, die an einer Bearbeitungs- oder Meßmaschine aufgesetzt wird, ist bekannt aus der Druckschrift WO 91/16594 und JP-OS-3-153915 sowie der INA-Technical Product Information TPI 86 vom September 1994 "Integrated opto-electronic Measuring system CMS".

Bei den bekannten Linearführungen mit integriertem Längenmeßsystem für Bearbeitungs- oder Meßmaschinen wird der den Maßstab ablesende Abtastkopf direkt an der Führungsschiene geführt und zudem fest mit dem Wagen der Führungsschiene verbunden. Dies erfordert eine spezielle Justage und es kann bei der Montage der Führungsschiene oder beim Betrieb der Maschine auch zu Deformationen in der Längenmeßeinrichtung kommen, was die Meßgenauigkeit beeinträchtigen kann.

Da ferner bei den bekannten Linearführungen mit integriertem Längenmeßsystem für Bearbeitungs- oder Meßmaschinen der Maßstab mit einer Fläche der Führungsschiene faktisch unlösbar verbunden ist, muß im Wartungs- oder Störfall die gesamte Linearführung von der Maschine entfernt werden, was einen erheblichen Aufwand bedingt.

Bei Bearbeitungs- oder Meßmaschinen ist es an sich bekannt, deren Längenmeßeinrichtungen, die als eigenständige Baueinheit unmittelbar am Bett oder Schlitten der Maschine angebaut werden, entweder gemäß der US 4 492 032 direkt über Verbindungsmittel wechselbar an der Maschine zu befestigen oder indirekt über eine Montageschiene. Dabei kann die Montageschiene selbst Verbindungsmittel aufweisen, oder die Montageschiene wird fest an der Maschine angebracht, während die Längenmeßeinrichtung über Verbindungsmittel wechselbar mit der Montageschiene verbunden ist (US-PS 3,910,703, EP-PS 0 185 072 und DE-GM 88 08 811). Als Verbindungsmittel werden dabei schwalbenschwanzförmig ineinandergreifende Elemente an den zu verbindenen Baueinheiten vorgesehen.

Bei kolbenstangenlosen Druckmittelzylindern ist es bereits bekannt, eine gekapselte Längenmeßeinrichtung außen am Zylinderrohr mittels Halterungen zu befestigen, die in eine Längsnut außen am Zylinderrohr, die parallel zur Zylinderbohrung verläuft, eingesetzt sind (EP-PS 0 214 615).

Der Erfindung liegt die Aufgabe zugrunde, eine verbesserte Linear- oder Bogenführung insbesondere für Bearbeitungs- oder Meßmaschinen anzugeben, deren Längenmeßeinrichtung somit leicht anbringbar sowie gegebenenfalls auch leicht demontierbar sein soll und die darüber hinaus eine hohe Meßgenauigkeit gewährleistet.

Diese Aufgabe wird durch eine Linear- oder Bogenführung mit den im Patentanspruch 1 aufgeführten Merkmalen gelöst. Vorteilhafte weitere Ausgestaltungen der Erfindung sind in den abhängigen Ansprüchen angegeben.

Die erfindungsgemäße Linear- oder Bogenführung bietet den Vorteil, daß die Längenmeßeinrichtung als vormontierte Baugruppe an der Führungsschiene angebracht werden kann, was nicht nur getrennte Funktionen gewährleistet, sondern eine besonders einfache Montage und zudem eine getrennte Wartung von Führung und Längenmeßeinrichtung ermöglicht. Darüberhinaus ergibt sich keine mechanische Schwächung der Führungsschiene und auch die Genauigkeit ist unabhängig von Anbau- und Lastverhältnissen, beispielsweise vom Anzugsmoment der Schrauben zum Befestigen der Führungsschiene sowie vom stehenden, hängenden oder seitlichen Anbau derselben. Ein weiterer Vorteil ist auch die gute Anpassung an verschiedene Führungssysteme.

Anhand der Zeichnung wird die Erfindung näher erläutert.

Es zeigen
- Figur 1: eine Linearführung mit einer offenen Längenmeßeinrichtung an der Führungsschiene;
- Figur 2: eine weitere Linearführung mit einer offenen Längenmeßeinrichtung an der Führungsschiene;
- Figur 3: eine Linearführung mit einer gekapselten Längenmeßeinrichtung an der Führungsschiene;
- Figur 4: eine Ansicht der Linearführung gemäß Figur 3;
- Figur 5: eine Linearführung mit einer Längenmeßeinrichtung, die eine Wechselkupplung aufweist;
- Figur 6: eine Linearführung mit einer Längenmeßeinrichtung, die über eine Montageschiene angebracht ist;
- Figur 7: eine weitere Linearführung mit einer Längenmeßeinrichtung, die über eine Montageschiene angebracht ist und
- Figur 8: eine gekapselte inkrementale Längenmeßeinrichtung lichtelektrischer Art.

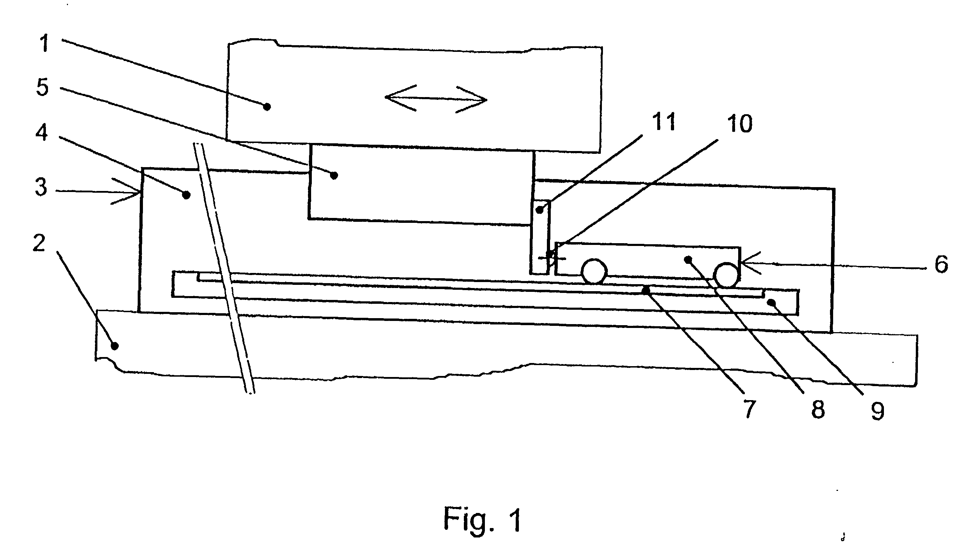

Figur 1 zeigt schematisch das Bett 2 beispielsweise einer Bearbeitungs- oder Meßmaschine, auf welchem ein Maschinenschlitten 1 in Pfeilrichtung verschiebbar ist. Die insgesamt mit 3 bezeichnete Führung für den Schlitten 1 ist eine an sich bekannte Linearführung, die eine Führungsschiene 4 mit gehärteten und geschliffenen Führungsflächen aufweist, an denen ein Wagen 5 über nicht dargestellte Rollen- oder Kugelelemente verschiebbar ist. Der Wagen 5 der Linearführung 3 ist mit dem Maschinenschlitten 1 verbunden, dessen Relativlage zum Maschinenbett 2 gemessen oder eingestellt werden soll. Linearführungen der vorgenannten Art sind beschrieben beispielsweise in der Zeitschrift "Industrie Anzeiger" 18/92, Seiten 43 bis 45. Die Führung nach dem vorgenannten Prinzip kann in nicht dargestellter Weise auch eine gekrümmte Führungsschiene aufweisen, beispielsweise nach Art der Bogenführung gemäß der Zeitschrift "Produktion" Nr. 39 vom 29.09.1994, Seite 23.

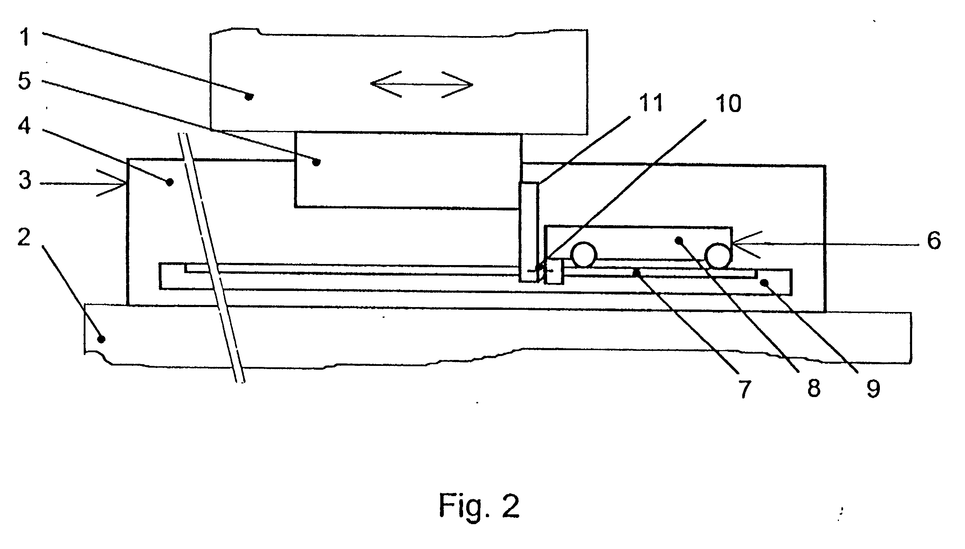

In den Figuren 1 und 2 ist eine offene Längenmeßeinrichtung 6 als separate, vormontierte Baueinheit an der Führungsschiene 4 befestigt. Die Längenmeßeinrichtung 6 besitzt einen Maßstab 7, der an einem Träger 9 vorgesehen ist und von einem Abtastkopf 8 zum Erzeugen elektrischer Meßsignale abgetastet wird. Der Träger 9 dient dabei als Hilfsführung für den Abtastkopf 8, der zweckmäßig über Kugellager darauf gleitet und mittels einer Kupplung 10 mit einem Mitnehmer 11 verbunden ist, der seinerseits am Wagen 5 der Linearführung 3 befestigt ist. Die Kupplung 10 besteht im einfachsten Fall aus Elementen mit einer gekrümmten und ebenen Fläche, die mittels einer Zugfeder in Kontakt gehalten werden. Die Kupplung 10 bewirkt, daß der Abtastkopf 8 nur in Meßrichtung steif am Wagen 5 angekoppelt und in anderen Richtungen gelenkig ist. In Figur 1 ist der Abtastkopf 8 an seinem Trägerteil in Höhe der Teilungsebene des Maßstabes 7 angekoppelt, in Figur 2 dagegen in Höhe der neutralen Faser des Maßstabes 7 (derartige Ankopplungen sind an sich bekannt beispielsweise aus der DE-PS 22 19 624).

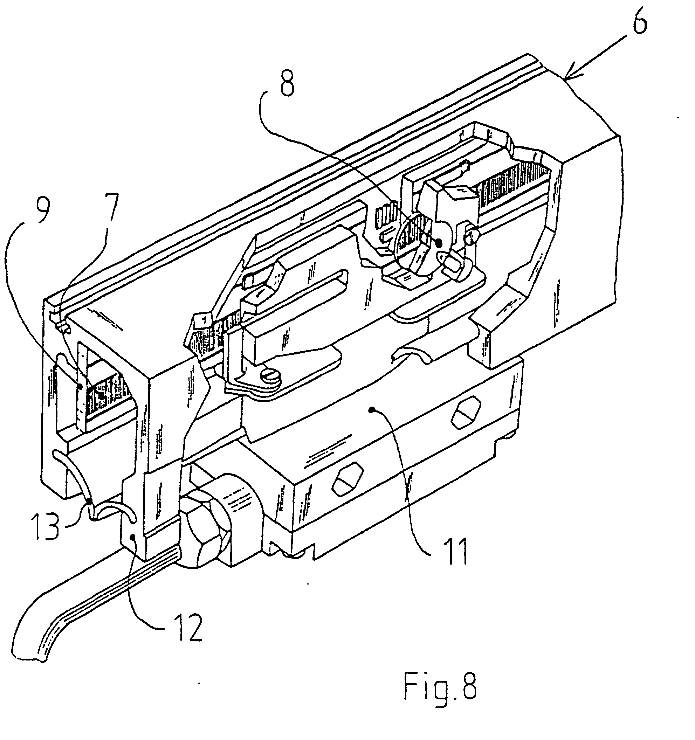

Die Längenmeßeinrichtung 6 ist im Ausführungsbeispiel eine inkrementale Meßeinrichtung, die nach dem Prinzip der in Figur 8 dargestellten lichtelektrischen Anordnung arbeitet. Die an der Linearführung 3 erfindungsgemäß angebrachte Längenmeßeinrichtung 6 kann aber auch eine absolute Meßeinrichtung sein und es ist zudem jedes physikalische Funktionsprinzip denkbar, beispielsweise magnetischer, induktiver oder kapazitiver Art.

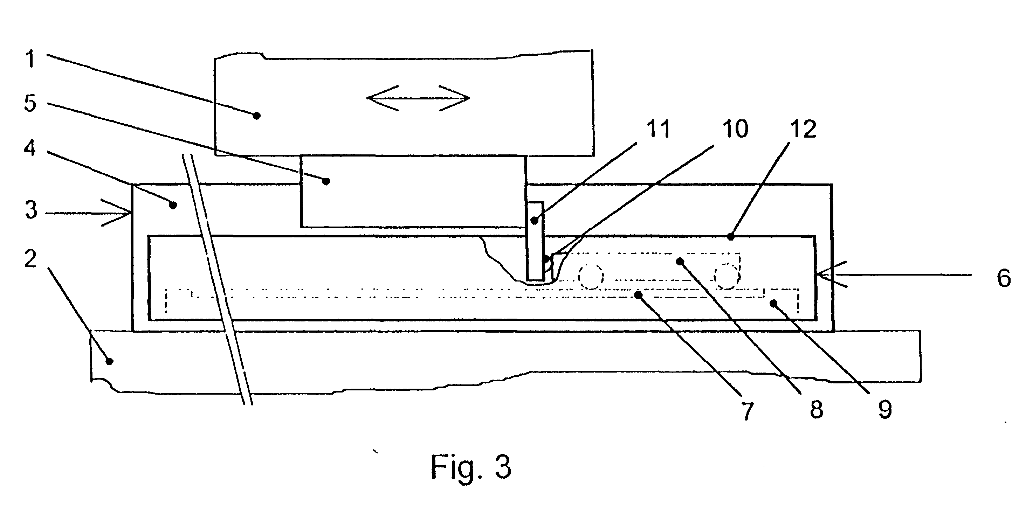

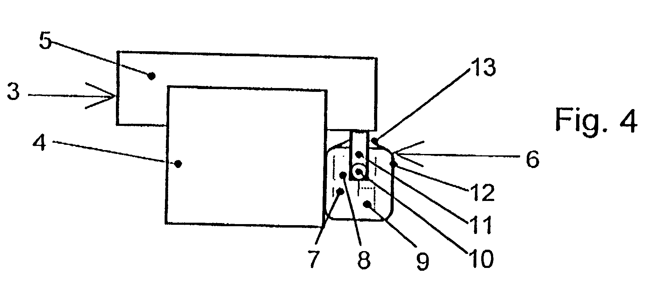

Die Figuren 3 und 4 zeigen eine gekapselte inkrementale Längemeßeinrichtung 6, die wieder als separate, vormontierte Baueinheit an der Führungsschiene 4 der Linearführung 3 befestigt ist. Eine gekapselte Längemeßeinrichtung 6 dieser Art ist in Figur 8 schematisch dargestellt. Sie besitzt als Kernelemente einen Maßstab 7 in Form einer Gitterteilung, die von einer entsprechenden Gitterteilung im Abtastkopf 8 zur Erzeugung elektrischer Meßsignale abgetastet wird. Der Maßstab 7 befindet sich an einem Träger 9, der mit als Hilfsführung für den darauf gleitenden Abtastkopf 8 dient, der am Mitnehmer 11 gelenkig angekoppelt ist. Die Elemente Maßstab 7 und Abtastkopf 8 der lichtelektrischen Längenmeßeinrichtung 6 sind in einem Gehäuse 12 untergebracht, das mittels biegsamer Dichtlippen 13 aus Gummi oder Kunststoff abgedeckt ist. Der Mitnehmer 11, der mit dem Wagen 5 der Linearführung 3 fest verbunden ist, durchdringt die vorgenannten Dichtlippen 13. Die gekapselte Längemeßeinrichtung 6 kann nach unterschiedlichen physikalischen Prinzipien arbeiten, wie oben im Zusammenhang mit den Figuren 1 und 2 bereits beschrieben. Offene und gekapselte Längemeßeinrichtungen 6, wie erfindungsgemäß als separate, vormontierte Baueinheiten an der Linearführung 3 vorgesehen, können an sich der Firmendruckschrift "HEIDENHAIN-Lieferübersicht" Ausgabe August 1994, Seiten 10 bis 17, entnommen werden.

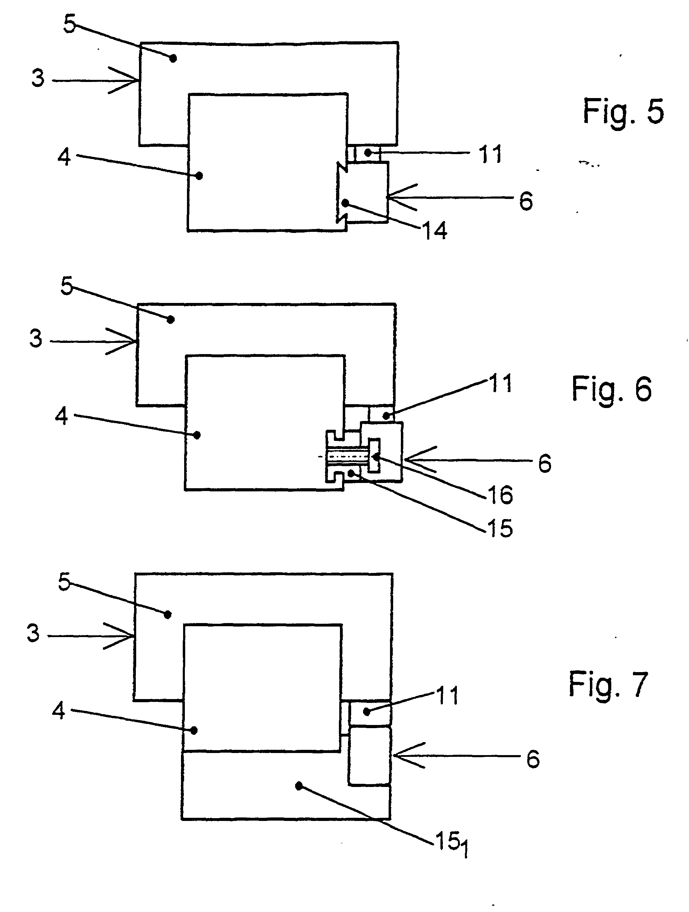

In Figur 5 ist eine gekapselte Längemeßeinrichtung 6 über ein Verbindungsmittel in Form einer Wechselkupplung 14 an der Führungsschiene 4 der Linearführung 3 leicht montierbar und austauschbar angebracht. Die Wechselkupplung 14 ist nach Art einer Schwalbenschwanzpaarung ausgebildet. Die Aufnahmenut befindet sich dabei in der Führungsschiene 4, der schwalbenschwanzförmige Vorsprung an der Längenmeßeinrichtung 6.

Figur 6 zeigt eine Linearführung 3, bei der erfindungsgemäß eine gekapselte Längemeßeinrichtung 6 über eine Montageschiene 15 an der Führungsschiene 4 befestigt ist. Die Montageschiene 15, die nach Art eines Nutensteines in die Führungsschiene 4 eingreift, wird dabei mittels Schrauben 16 an der Führungsschiene 4 festgeklemmt. Es ist auch denkbar, die Montageschiene an der Führungsschiene zu befestigen und zwischen der Montageschiene und der Längenmeßeinrichtung eine Wechselkupplung vorzusehen.

Die Figur 7 zeigt eine Linearführung 3, die an einer Montageschiene 15₁ aufgesetzt ist, an der zudem die gekapselte Längemeßeinrichtung 6 wechselbar befestigt ist, die über den Mitnehmer 11 mit dem Wagen 5 verbunden ist.

Der Maßstab und/oder dessen Träger können in nicht dargestellter Weise über gelenkartige Ausgleichselemente zweckmäßig an den Maßstabenden praktisch zwangskräftefrei mit der Führungsschiene oder der Montageschiene verbunden sein, wobei die Ausgleichselemente auch als Wechselkupplung ausgebildet sein können.

## Patentansprüche

1. Linear- oder Bogenführung mit
- einer geraden oder gekrümmten Führungsschiene (4) als eigenständige Baueinheit und einem darauf verschiebbar geführten Wagen (5), wobei die Führungsschiene (4) an einem Maschinenbett (2) befestigbar ist und der Wagen (5) mit einem Maschinenschlitten (1) verbindbar ist;
- einer vormontierten Meßeinrichtung (6), bestehend aus einem Maßstab (7) und einem Abtastkopf (8) in einem Gehäuse (12), die der Führungsschiene (4) zum Messen des Verfahrweges des Wagens (5) zugeordnet ist, indem die Meßeinrichtung (6) als separate, vormontierte Baueinheit an der Führungsschiene (4) aufgesetzt ist, wobei
- die Meßeinrichtung (6) eine von der Führungsschiene (4) getrennte Hilfsführung (9) aufweist, an der der Abtastkopf (8) geführt ist, und
- der Abtastkopf (8) der Meßeinrichtung (6) über eine in Meßrichtung steife, ansonsten gelenkige Kupplung (10) am Wagen (5) der Führungsschiene (4) angekoppelt ist.

2. Führung nach Anspruch 1, **dadurch gekennzeichnet, daß** die Hilfsführung (9, 12) durch den Maßstab selbst und/oder durch eine separate Baueinheit oder durch das Gehäuse (12) gebildet wird.

3. Führung nach Anspruch 1, **dadurch gekennzeichnet, daß** mit der Führungsschiene (4) und der Meßeinrichtung (6) im Wirkzusammenhang stehende Verbindungsmittel (14) in Form einer Wechselkupplung zum definierten, wechselbaren Befestigen der Meßeinrichtung (6) an der Führungsschiene (4) vorgesehen sind.

4. Führung nach Anspruch 1, **dadurch gekennzeichnet, daß** die Meßeinrichtung (6) über eine gesonderte Montageschiene (15; 15₁) an der Führungsschiene (4) befestigt ist.

5. Führung nach Anspruch 3, **dadurch gekennzeichnet, daß** die Meßeinrichtung (6) an einer Montageschiene (15) befestigt ist, und daß die Verbindungsmittel in Form einer Wechselkupplung direkt an der Führungsschiene (4) und an einer dieser zugewandten Seite der Montageschiene (15) vorgesehen sind.

6. Führung nach Anspruch 3, **dadurch gekennzeichnet, daß** die Meßeinrichtung (6) an einer Montageschiene (15) befestigt ist, und daß zwischen der an der Führungsschiene (4) befestigten Montageschiene (15) und der Meßeinrichtung (6) Verbindungsmittel in Form einer Wechselkupplung vorgesehen sind.

7. Führung nach Anspruch 3, **dadurch gekennzeichnet, daß** die Verbindungsmittel (14) zum wechselbaren Befestigen der Meßeinrichtung (6) an der Führungsschiene (4) durch formschlüssig ineinandergreifende Elemente gestaltet sind, die jeweils an den zu verbindenden Baugruppen vorgesehen sind.

8. Führung nach Anspruch 7, **dadurch gekennzeichnet, daß** die formschlüssig ineinandergreifenden Verbindungsmittel (14) durch Elemente nach Art einer Schwalbenschwanzpaarung gebildet sind.

9. Führung nach Anspruch 8, **dadurch gekennzeichnet, daß** eine schwalbenschwanzförmige Aufnahmenut in der Führungsschiene (4) und das darin formschlüssig eingreifende Gegenstück als Vorsprung an der Meßeinrichtung (6) oder deren Träger vorgesehen sind.

10. Führung nach Anspruch 3, **dadurch gekennzeichnet, daß** die wechselbar an der Führungsschiene (4) anbringbare Meßeinrichtung (6) mittels wenigstens eines Klemmelementes (16) unverrückbar an der Führungsschiene (4) befestigbar ist.

11. Führung nach Anspruch 10, **dadurch gekennzeichnet, daß** die Klemmelemente (16) direkt auf die Verbindungsmittel an der Führungsschiene (4) und Meßeinrichtung (6) oder deren Trägereinwirken.

12. Führung nach Anspruch 3, **dadurch gekennzeichnet, daß** der Maßstab (7) und Abtastkopf (8) der Meßeinrichtung (6) in einem schienenartigen Gehäuse (12) gekapselt eingebracht sind, und daß das Gehäuse (12) mittels der Verbindungsmittel (14) seitlich an der Führungsschiene (4) wechselbar angebracht ist.

13. Führung nach Anspruch 12, **dadurch gekennzeichnet, daß** das schienenartige Gehäuse (12) einen Schlitz aufweist, der mittels biegsamer Dichttippen (13) verschlossen ist, durch die ein Mitnehmer (11) hindurchgreift, der einmal über eine in Meßrichtung steife, ansonsten gelenkige Kupplung (10) mit dem Abtastkopf (8) verbunden ist und zum anderen am verschiebbaren Wagen (5) der Führungsschiene (4) befestigt ist.

14. Führung nach Anspruch 3, **dadurch gekennzeichnet, daß** direkt am Gehäuse (12) ein schwalbenschwanzförmiger Vorsprung vorgesehen ist, der in eine schwalbenschwanzförmige Aufnahmenut in der Führungsschiene (4) eingreift.

15. Führung nach Anspruch 3, **dadurch gekennzeichnet, daß** daß das Gehäuse (12) an einer Montageschiene (15) befestigt ist, an der ein Vorsprung vorgesehen ist, der in eine Aufnahmenut direkt in der Führungsschiene (4) eingreift.

16. Führung nach Anspruch 1, **dadurch gekennzeichnet, daß** der Maßstab oder dessen Träger - beispielsweise in Form eines Gehäuses zur Kapselung - über gelenkartige Ausgleichselemente zweckmäßig an den Maßstabenden faktisch zwangskräftefrei mit der Führungsschiene verbunden ist.

17. Führung nach Anspruch 1, **dadurch gekennzeichnet, daß** die Meßteilung des Maßstabes (7) außerhalb der neutralen Faser liegt, und daß der Abtastkopf (8) parallel zur Teilungsebene geführt ist und an seinem Trägerteil in Höhe der neutralen Faser des Maßstabes (7) angekoppelt ist.

18. Führung nach Anspruch 1, **dadurch gekennzeichnet, daß** der an der Hilfsführung (9) geführte Abtastkopf (8) an seinem Trägerteil wirkungsmäßig in der Teilungsebene des Maßstabes (7) angekoppelt ist.

19. Führung nach Anspruch 1, **dadurch gekennzeichnet, daß** der Wagen (5) an der geraden oder gekrümmten Führungsschiene (4) über Rollen- oder Kugelelemente gelagert ist.

## Claims

1. Linear or curved guide having
- a straight or curved guide rail (4) as an independent component and a carriage (5) guided thereon in a displaceable manner, the guide rail (4) being able to be secured to a machine base (2) and the carriage (5) being able to be connected to a machine slide (1);
- a pre-assembled measuring device (6) comprising a scale (7) and a scanning head (8) in a housing (12) and which is associated with the guide rail (4) to measure the travel path of the carriage (5), by the measuring device (6) being placed on the guide rail (4) as a separate pre-assembled component, wherein
- the measuring device (6) has an auxiliary guide (9) separate from the guide rail (4) and on which the scanning head (8) is guided, and
- the scanning head (8) of the measuring device (6) is coupled to the carriage (5) of the guide rail (4) by means of a coupling which is rigid in the measuring direction but otherwise flexible.

2. Guide according to claim 1, **characterised in that** the auxiliary guide (9, 12) is formed by the scale itself and/or by a separate component or by the housing (12).

3. Guide according to claim 1, **characterised in that** connecting means (14), in the form of an exchangeable coupling operatively connected to the guide rail (4) and the measuring device (6) are provided to secure the measuring device (6) to the guide rail (4) in a defined and exchangeable manner.

4. Guide according to claim 1, **characterised in that** the measuring device (6) is secured to the guide rail (4) by means of a separate mounting rail (15; 15₁).

5. Guide according to claim 3, **characterised in that** the measuring device (6) is secured to a mounting rail (15), and **in that** the connecting means in the form of an exchangeable coupling are provided directly on the guide rail (4) and on the side of the mounting rail (15) facing the guide rail.

6. Guide according to claim 3, **characterised in that** the measuring device (6) is secured to a mounting rail (15), and **in that** between the mounting rail (15), which is secured to the guide rail (4), and the measuring device (6) connecting means in the form of an exchangeable coupling are provided.

7. Guide according to claim 3, **characterised in that** the connecting means (14) to secure the measuring device (6) to the guide rail (4) in an exchangeable manner are formed by elements which engage in one another in an interlocking manner and which are respectively provided on the assemblies to be connected.

8. Guide according to claim 7, **characterised in that** the connecting means (14) engaging in one another in an interlocking manner are formed by elements in the manner of a dovetail pairing.

9. Guide according to claim 8, **characterised in that** a dovetailed receiving groove is provided in the guide rail (4) and the counterpart engaging therein in an interlocking manner is provided as a projection on the measuring device (6) or its support.

10. Guide according to claim 3, **characterised in that** the measuring device (6), which can be attached in an exchangeable manner to the guide rail (4), can be secured immovable on the guide rail (4) by means of a clamping element (16).

11. Guide according to claim 10, **characterised in that** the clamping elements (16) act directly on the connecting means on the guide rail (4) and measuring device (6) or its support.

12. Guide according to claim 3, **characterised in that** the scale (7) and scanning head (8) of the measuring device (6) are introduced enclosed in rail-like housing (12), and **in that** the housing (12) is attached in an exchangeable manner to the guide rail (14) at the side by means of the connecting means (14).

13. Guide according to claim 12, **characterised in that** the rail-like housing (12) has a slit which is closed by means of pliant sealing lips (13) through which a carrier (11) grips which is firstly connected to the scanning head (8) via a coupling (10) which is rigid in the measuring direction but otherwise flexible, and is secondly secured to the displaceable carriage (5) of the guide rail (4).

14. Guide according to claim 3, **characterised in that** there is provided directly on the housing (12) a dovetailed projection which engages in a dovetailed receiving groove in the guide rail (4).

15. Guide according to claim 3, **characterised in that** the housing (12) is secured to a mounting rail (15) on which a projection is provided which engages in a receiving groove directly in the guide rail (4).

16. Guide according to claim 1, **characterised in that** the scale or its support - for example in the form of a housing to enclose it completely - is connected to the guide rail in fact free of constraining forces via hinge-like equalising members expediently at the scale ends.

17. Guide according to claim 1, **characterised in that** the measurement division of the scale (7) lies outside the neutral fibre, and **in that** the scanning head (8) is guided parallel to the division plane and is coupled to its support part at the height of the neutral fibre of the scale (7).

18. Guide according to claim 1, **characterised in that** the scanning head (8) guided on the auxiliary guide (9) is operatively coupled in the division plane of the scale (7).

19. Guide according to claim 1, **characterised in that** the carriage (5) is mounted on the straight or curved guide rail (4) via roller or ball elements.

## Revendications

1. Système de guidage linéaire ou courbe comprenant
- un rail de guidage (4) rectiligne ou courbe en tant qu'unité de construction indépendante et un chariot (5) guidé en translation sur celui-ci, le rail de guidage (4) étant fixé à un banc de machine (2) et le chariot (5) pouvant être lié à un chariot de machine (1),
- un dispositif de mesure (6) préassemblé, avec une règle (7) et une tête de palpage (8) montées dans un boîtier (12), qui est associé au rail de guidage (4) pour mesurer la course de déplacement du chariot (5), le dispositif de mesure (6) étant placé sur le rail de guidage (4) en tant qu'unité de construction préassemblée,
dans lequel
- le dispositif de mesure (6) comporte un moyen de guidage auxiliaire (9) séparé du rail de guidage (4), sur lequel la tête de palpage (8) est guidée et
- la tête de palpage (8) du dispositif de mesure (6) est couplée au chariot (5) associé au rail de guidage (4) par l'intermédiaire d'un accouplement (10) rigide dans la direction de mesure, mais articulé dans les autres directions.

2. Système de guidage selon la revendication 1, **caractérisé en ce que** le moyen de guidage auxiliaire (9, 12) est formé de la règle elle-même et/ou d'une unité de construction séparée ou du boîtier (12).

3. Système de guidage selon la revendication 1, **caractérisé en ce que** des moyens de liaison (14) quicoopèrent avec le rail de guidage (4) et le dispositif de mesure (6) sont prévus sous la forme d'un accouplement démontable pour la fixation avec possibilité de démontage du dispositif de mesure (6) sur le rail de guidage (4).

4. Système de guidage selon la revendication 1, **caractérisé en ce que** le dispositif de mesure (6) est fixé au rail de guidage (4) par l'intermédiaire d'un rail de montage (15; 15₁) séparé.

5. Système de guidage selon la revendication 3, **caractérisé en ce que** le dispositif de mesure (6) est fixé à un rail de montage (15) et **en ce que** les moyens de liaison sous la forme d'un accouplement démontable sont prévus directement sur le rail de guidage (4) et sur une face du rail de montage (15) tournée vers celui-ci.

6. Système de guidage selon la revendication 3, **caractérisé en ce que** le dispositif de mesure (6) est fixé à un rail de montage (15) et **en ce que** des moyens de liaison entre le rail de montage (15) fixé au rail de guidage (4) et le dispositif de mesure (6) sont prévus sous la forme d'un accouplement démontable.

7. Système de guidage selon la revendication 3, **caractérisé en ce que** les moyens de liaison (14) pour la fixation démontable du dispositif de mesure (6) au rail de montage (15) est conformée en éléments qui s'interpénètrent avec complémentarité de formes, pévus sur les ensembles à assembler.

8. Système de guidage selon la revendication 7, **caractérisé en ce que** les moyens de liaison (14) qui s'interpénètrent avec complémentarité de formes sont formés d'éléments associés de type à queue d'aronde.

9. Système de guidage selon la revendication 8, **caractérisé en ce qu'**une rainure de montage en queue d'aronde est prévue dans le rail de guidage (4) et que la pièce associée qui s'engage dans celle-ci avec complémentarité de formes est conformée en saillie sur le dispositif de mesure (6) ou sur le support de celui-ci.

10. Système de guidage selon la revendication 3, **caractérisé en ce que** le dispositif de mesure (6), monté avec possibilité de démontage sur le rail de guidage (4), est fixé sans possibilité de déplacement au rail de guidage (4) à l'aide d'au moins un élément de serrage (16).

11. Système de guidage selon la revendication 10, **caractérisé en ce que** les éléments de serrage (16) agissent directement sur les moyens de liaison au rail de guidage (4) et le dispositif de mesure (6) ou le support de celui-ci.

12. Système de guidage selon la revendication 3, **caractérisé en ce que** la règle (7) et la tête de palpage (8) du dispositif de mesure (6) sont enfermés dans un boîtier (12) formant rail et **en ce que** le boîtier (12) est fixé de manière démontable au moyen des éléments de liaison (14) sur le côté du rail de guidage (4).

13. Système de guidage selon la revendication 12, **caractérisé en ce que** le boîtier (12) formant rail comporte une fente qui est fermée par des lèvres d'étanchéité (13) souples, entre lesquelles s'étend un entraîneur (11), qui est relié d'un côté à la tête de palpage (8) par l'intermédiaire d'un moyen d'accouplement (10) rigide dans la direction de mesure mais articulé dans les autres directions, et de l'autre est fixé au chariot (5) coulissant du rail de guidage (4).

14. Système de guidage selon la revendication 3, **caractérisé en ce qu'**une saillie en queue d'aronde est prévue sur le boîtier (12), laquelle saillie s'engage dans une rainure de montage en queue d'aronde aménagée dans le rail de guidage (4).

15. Système de guidage selon la revendication 3, **caractérisé en ce que** le boîtier (12) est fixé à un rail de montage (15), sur lequel il est prévu une saillie qui s'engage dans une rainure de montage aménagée directement dans le rail de guidage (4).

16. Système de guidage selon la revendication 1, **caractérisé en ce que** la règle ou son support - par exemple sous la forme d'un boîtier d'encapsulage - est relié d'une manière exempte de contraintes par des éléments compensateurs de type articulé, avantageusement par ses extrémités au rail de guidage (4).

17. Système de guidage selon la revendication 1, **caractérisé en ce que** la graduation de mesure de la règle (7) est située à l'extérieur de la fibre neutre et **en ce que** la tête de palpage (8) est guidée parallèlement au plan de division et est couplée à son élément de support au niveau de la fibre neutre de la règle (7).

18. Système de guidage selon la revendication 1, **caractérisé en ce que** la tête de palpage (8) guidée sur le moyen de guidage auxiliaire (9) au niveau de sa partie de support est couplée activement dans le plan de division de la règle (7).

19. Système de guidage selon la revendication 1, **caractérisé en ce que** le chariot (5) repose sur le rail de guidage (4) rectiligne ou courbe par des éléments à rouleaux ou des éléments à billes.
